# EUROPÄISCHE PATENTSCHRIFT

(11) **EP 1 527 493 B1**
(45) Veröffentlichungstag und Bekanntmachung des Hinweises auf die Patenterteilung: **04.01.2006**
(21) Anmeldenummer: 03784120.2
(22) Anmeldetag: 31.07.2003
(51) Int. Cl.: H01M 8/10, C08J 5/22

(54) **PROTONENLEITENDE POLYMERMEMBRAN, WELCHE PHOSPHONSÄUREGRUPPEN ENTHALTENDE POLYMERE AUFWEIST, UND DEREN ANWENDUNG IN BRENNSTOFFZELLEN**
PROTON-CONDUCTING POLYMER MEMBRANE COMPRISING A POLYMER WITH PHOSPHONIC ACID GROUPS AND USE THEREOF IN FUEL CELLS
MEMBRANE POLYMERE CONDUCTRICE DE PROTONS COMPRENANT DES POLYMERES A GROUPES ACIDE PHOSPHONIQUE ET APPLICATION DE LADITE MEMBRANE DANS DES PILES A COMBUSTIBLE

(30) Priorität: 02.08.2002 DE 10235358
(43) Veröffentlichungstag der Anmeldung: 04.05.2005
(73) Patentinhaber: Pemeas GmbH, 65926 Frankfurt am Main (DE)
(72) Erfinder: KIEFER, Joachim, 66679 Losheim am See (DE); UENSAL, Oemer, 55128 Mainz (DE); CALUNDANN, Gordon, North Plainfield, NJ 07060 (US)
(74) Vertreter: Luderschmidt, Schüler & Partner GbR
(86) Internationale Anmeldenummer: PCT/EP2003/008461
(87) Internationale Veröffentlichungsnummer: WO 2004/015802

(56) Entgegenhaltungen:
- US-A- 3 224 908
- US-A1- 2002 045 085

## Beschreibung

Die vorliegende Erfindung betrifft eine protonenleitende Polymerelektrolytmembran umfassend Phosphonsäuregruppen enthaltende Polymere, die aufgrund ihrer hervorragenden chemischen und thermischen Eigenschaften vielfältig eingesetzt werden kann und sich insbesondere als Polymer-Elektrolyt-Membran (PEM) in sogenannten PEM-Brennstoffzellen eignet.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas oder ein Methanol-Wasser-Gemisch, und der anderen Elektrode ein Oxidationsmittel, wie Sauerstoffgas oder Luft, zugeführt und dadurch chemische Energie aus der Brennstoffoxidation direkt in elektrische Energie umgewandelt. Bei der Oxidationsreaktion werden Protonen und Elektronen gebildet.

Der Elektrolyt ist für Wasserstoffionen, d.h. Protonen, aber nicht für reaktive Brennstoffe wie das Wasserstoffgas oder Methanol und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Durch die sehr gute Mischbarkeit von Methanol und Wasser weisen solche Kationenaustauschermembranen eine hohe Methanolpermeabilität auf und sind deshalb für Anwendungen in einer Direkt-Methanol-Brennstoffzelle ungeeignet. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nation verwendet werden.

So verwendet man als Materialien für Polymerelektrolytmembranen beispielsweise Perfluorsulfonsäurepolymere. Das Pertluorsulfonsäurepolymer (wie z.B. Nafion) weist im allgemeinen ein Perfluorkohlenwasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Nachteil all dieser Kationenaustauschermembranen ist die Tatsache, dass die Membran befeuchtet werden muss, die Betriebstemperatur auf 100°C beschränkt ist, und die Membranen eine hohe Methanolpermeabilität aufweisen. Ursache für diese Nachteile ist der Leitfähigkeitsmechanismus der Membran, bei der der Transport der Protonen an den Transport des Wassermoleküls gekoppelt ist. Dies bezeichnet man als "Vehicle-Mechanismus" (K.-D. Kreuer, Chem. Mater. 1996, 8, 610-641).

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazol, mit einer starken Säure, wie Phosphorsäure, Schwefelsäure usw., behandelt wird.

In *J. Electrochem. Soc.,* Band 142, Nr. 7, 1995, S. L121-L123 wird die Dotierung eines Polybenzimidazols in Phosphorsäure beschrieben.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) üblicherweise nach der Formgebung der Polyazolfolie beigefügt. Das Polymer dient dabei als Träger für den Elektrolyten bestehend aus der hochkonzentrierten Phosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass eine Brennstoffzelle, bei der eine derartige Polymerelektrolytmembran eingesetzt wird, bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reakionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. für Automobilanwendungen, oder als vielfältiger Ersatz von Batteriesystemen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme iässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches Brennstoffzellensystem jedoch auch Nachteile auf. So ist die Haltbarkeit von Phosphorsäure dotierten Membranen relativ begrenzt. Hierbei wird die Lebensdauer insbesondere durch einen Betrieb der Brennstoffzelle unterhalb von 100°C, beispielsweise bei 80°C deutlich herabgesetzt. In diesem Zusammenhang ist jedoch festzuhalten, dass beim An- und Abfahren der Zellen die Brennstoffzelle bei diese Temperaturen betrieben werden muss.

Des weiteren ist die Herstellung von Phosphorsäure dotierten Membranen relativ teuer, da üblich zunächst ein Präpolymer gebildet wird, welches anschließend mit Hilfe eines Lösungsmittels zu einer Folie gegossen wird. Nach der Trocknung der Folie wird diese in einem letzten Schritt mit einer Säure dotiert.

Darüber hinaus stellt auch die relativ geringe mechanische Stabilität einer mit Phosphorsäure dotierten Polyazolfolie ein Problem dar. So kann die Membran durch den Druck, der durch das als Brennstoff dienende, in die Brennstoffzelle strömende Gas erzeugt wird, beschädigt werden, falls die mechanische Stabilität zu gering ist.

Des weiteren ist die Leistungsfähigkeit, beispielsweise die Leitfähigkeit von bekannten Membranen relativ begrenzt.

Weiterhin können die bekannten mit Phosphorsäure dotierten Membranen nicht in der sogenannten Direkt-Methanol-Brennstoffzelle (DMBZ) eingesetzt werden. Derartige Zellen sind jedoch von besonderem Interesse, da ein Methanol-Wasser-Gemisch als Brennstoff eingesetzt wird. Wird eine bekannte Membran auf Basis von Phosphorsäure verwendet, so versagt die Brennstoffzelle nach einer recht kurzen Zeit.

Der vorliegenden Erfindung liegt daher die Aufgabe zugrunde; eine neuartige Polymerelektrolytmembran bereitzustellen, die die zuvor dargelegten Aufgaben löst. Insbesondere soll so die Betriebstemperatur von <0°C bis auf 200°C ausgeweitet werden können, ohne dass die Lebensdauer der Brennstoffzelle sehr stark herabgesetzt werden würde.

Weiterhin sollte eine Polymerelektrolytmembran zur Verfügung gestellt werden, die in vielen verschiedenen Brennstoffzellen eingesetzt werden kann. So soll sich die Membran insbesondere für Brennstoffzellen eignen, die reinen Wasserstoff sowie zahlreiche kohlenstoffhaltige Brennstoffe insbesondere Erdgas, Benzin, Methanol und Biomasse als Energiequelle nutzen. Insbesondere soll die Membran in einer Wasserstoffbrennstoffzelle und in einer Direkt-Methanol-Brennstoffzelle (DMBZ) eingesetzt werden können.

Des weiteren soll eine erfindungsgemäße Membran kostengünstig und einfach hergestellt werden können. Darüber hinaus war es mithin Aufgabe der vorliegenden Erfindung Polymerelektrolytmembranen zu schaffen, die eine hohe Leistungsfähigkeit, insbesondere eine hohe Leitfähigkeit über einen weiten Temperaturbereich zeigen. Hierbei sollte die Leitfähigkeit, insbesondere bei hohen Temperaturen ohne eine zusätzliche Befeuchtung erzielt werden.

Des weiteren sollte eine Polymerelektrolytmembran geschaffen werden, die eine hohe mechanische Stabilität, beispielsweise einen hohen E-Modul, eine hohe Reißfestigkeit und eine hohe Bruchzähigkeit aufweist.

Darüber hinaus war es mithin Aufgabe der vorliegenden Erfindung eine Membran zur Verfügung zu stellen, die auch im Betrieb eine geringe Durchlässigkeit gegen die verschiedensten Brennstoffe, wie beispielsweise Wasserstoff oder Methanol aufweisen

Gelöst werden diese Aufgaben durch eine protonenleitende Polymermembran umfassend Phosphonsäuregruppen enthaltende Polymere mit allen Merkmalen des Anspruchs 1. Des weiteren bietet eine Elektrode mit einer protonenleitenden Polymerbeschichtung auf Basis von Polyazolen mit allen Merkmalen des Anspruchs 20 eine Lösung der zugrundeliegenden Aufgabe.

Gegenstand der vorliegenden Erfindung ist eine protonenleitende Polymermembran umfassend Phosphonsäuregruppen enthaltende Polymere erhältlich durch ein Verfahren umfassend die Schritte
A) Mischen von vinylhaltiger Phosphonsäure mit einem oder mehreren aromatischen Tetra-Amino-Verbindungen mit einer oder mehreren aromatischen Carbonsäuren, deren Estern, deren Säurehalogenide oder deren Säureanhydride, die mindestens zwei Säuregruppen pro Carbonsäure-Monomer enthalten, und/oder
   Mischen von vinylhaltiger Phosphonsäure mit einer oder mehreren aromatischen und/oder heteroaromatischen Diaminocarbonsäuren, deren Estern, deren Säurehalogenide oder deren Säureanhydride,
B) Erwärmen der Mischung erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einem Träger,
D) Polymerisation der in dem flächigen Gebilde erhältlich gemäß Schritt C) vorhandenen vinylhaltigen Phosphonsäure.

Eine erfindungsgemäße Membran zeigt über einen großen Temperaturbereich eine hohe Leitfähigkeit, die auch ohne eine zusätzliche Befeuchtung erzielt wird. Des weiteren kann eine Brennstoffzelle, die mit einer erfindungsgemäßen Membran ausgestattet ist, auch bei tiefen Temperaturen, beispielsweise bei 80°C betrieben werden, ohne dass hierdurch die Lebensdauer der Brennstoffzelle sehr stark herabgesetzt wird.

Eine erfindungsgemäße Polymerelektrolytmembran besitzt eine sehr geringe Methanolpermeabilität und eignet sich insbesondere für den Einsatz in einer DMBZ. Somit ist ein dauerhafter Betrieb einer Brennstoffzelle mit einer Vielzahl von Brennstoffen wie Wasserstoff, Erdgas, Benzin, Methanol oder Biomasse möglich.

Des weiteren kann eine erfindungsgemäße Membran einfach und kostengünstig hergestellt werden. So kann insbesondere auf große Mengen an teuren und gesundheitsschädlichen Lösungsmitteln, wie Dimethylacetamid verzichtet werden.

Darüber hinaus zeigen Membranen der vorliegenden Erfindung eine hohe mechanische Stabilität, insbesondere einen hohen E-Modul, eine hohe Reißfestigkeit und eine hohe Bruchzähigkeit. Des weiteren zeigen diese Membranen eine überraschend lange Lebensdauer.

Vinylhaltige Phosphonsäuren sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich die Polyvinylphosphonsäure aus dem Polymerisationsprodukt, das durch Polymerisation der Vinylhaltigen Phosphonsäure allein oder mit weiteren Monomeren und/oder Vernetzern erhalten wird.

Die Vinylhaltige Phosphonsäure kann ein, zwei, drei oder mehr Kohlenstoff Kohlenstoff-Doppelbindungen umfassen. Des weiteren kann die Vinylhaltige Phosphonsäure ein, zwei, drei oder mehr Phosphonsäuregruppen enthalten.

Im allgemeinen enthält die Vinylhaltige Phosphonsäure 2 bis 20, vorzugsweise 2 bis 10 Kohlenstoffatome.

Bei der in Schritt A) verwendeten vinylhaltigen Phosphonsäure handelt es sich vorzugsweise um Verbindungen der Formel 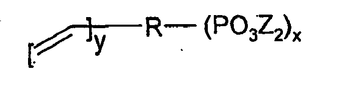
worin
- R: eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet

und/oder der Formel 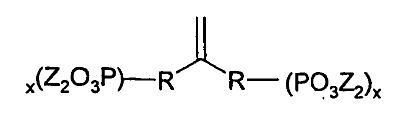
worin
- R: eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet

und/oder der Formel 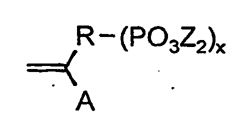
worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Vinylhaltigen Phosphonsäuren gehören unter anderem Alkene, die Phosphonsäuregruppen aufweisen, wie Ethenphosphonsäure, Propenphosphonsäure, Butenphosphonsäure; Acrylsäure- und/oder Methacrylsäüre-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Vinylhaltigen Phosphonsäuren können des weiteren auch in Form von Derivaten eingesetzt werden, die anschließend in die Säure überführt werden können, wobei die Überführung zur Säure auch in poiymerisiertem Zustand erfolgen kann. Zu diesen Derivaten gehören insbesondere die Salze, die Ester, die Amide und die Halogenide der Vinylhaltigen Phosphonsäuren.

Die in Schritt A) hergestellte Mischung umfasst vorzugsweise mindestens 20 Gew.-%, insbesondere mindestens 30 Gew.% und besonders bevorzugt mindestens 50 Gew.-%, bezogen auf das Gesamtgewicht der Mischung, vinylhaltige Phosphonsäure.

Die in Schritt A) hergestellte Mischung kann zusätzlich noch weitere organische und/oder anorganische Lösungsmittel enthalten. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu den anorganischen Lösungsmittel zählen insbesondere Wasser, Phosphorsäure und Polyphosphorsäure.

Diese können die Verarbeitbarkeit positiv beeinflussen. Insbesondere kann durch Zugabe des organischen Lösungsmittels die Löslichkeit von Polymeren verbessert werden, die beispielsweise in Schritt B) gebildet werden. Der Gehalt an vinylhaltiger Phosphonsäure in solchen Lösungen beträgt im allgemeinen mindestens 5 Gew.-%, vorzugsweise mindestens 10 Gew.%, besonders bevorzugt zwischen 10 und 97 Gew.-%.

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3;3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bei den erfindungsgemäß eingesetzten aromatischen Carbonsäuren handelt es sich um Di-carbonsäuren und Tri-carbonsäuren und Tetra-Carbonsäuren oder deren Estern, deren Anhydride oder deren Säurehalogenide, insbesondere deren Säurechloride. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4`-Stilbendicarbonsäure, 4-Carboxyzimtsäure, bzw. deren C1-C20-Alkyl-Ester oder C5-C12-Aryl-Ester, oder deren Säureanhydride oder deren Säurechloride. Bei den aromatischen Tri-, tetra-carbonsäuren bzw. deren. C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den erfindungsgemäß eingesetzten heteroaromatischen Carbonsäuren handelt es sich um heteroaromatischen Dicarbonsäuren und Tricarbonsäuren und Tetracarbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Der Gehalt an Tricarbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bei den erfindungsgemäß eingesetzten aromatischen und heteroaromatischen Diaminocarbonsäuren handelt es sich bevorzugt um Diaminobenzoesäure und deren Mono- und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren bzw. deren Estern, die mindestens zwei Säuregruppen pro Carbonsäure-Monomer enthalten, vorzugsweise in der Nähe von 1:2.

Die in Schritt A) hergestellte Mischung umfasst vorzugsweise mindestens 2 Gew.-%, insbesondere 5 bis 20 Gew.-% Monomere zur Herstellung von Polyazolen.

Das in Schritt B) gebildete Polymere auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (iX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII) 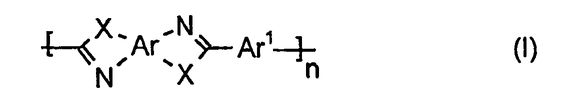 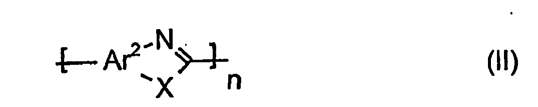 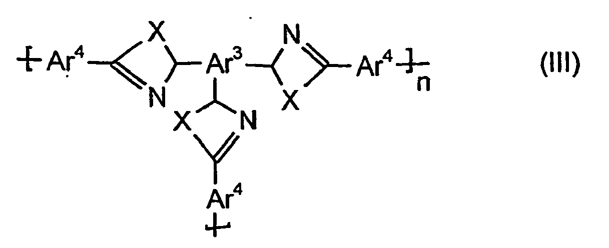 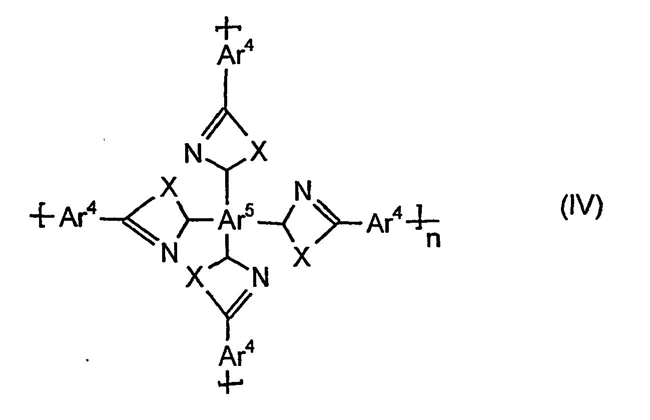 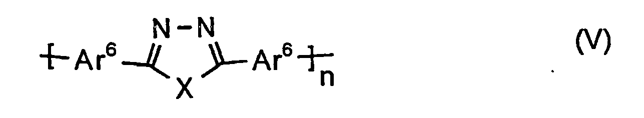 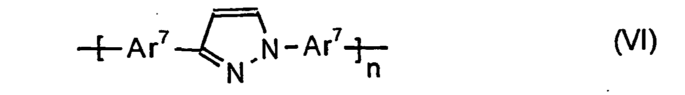 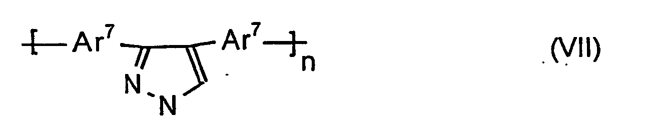 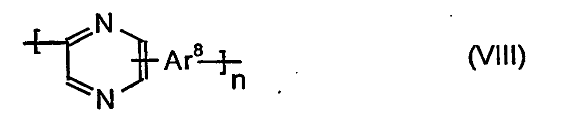 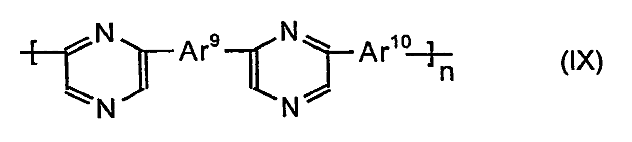 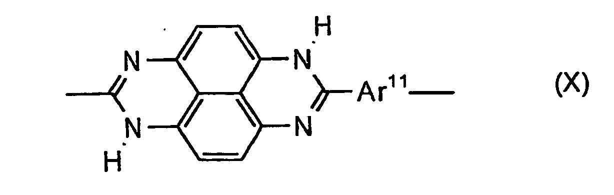 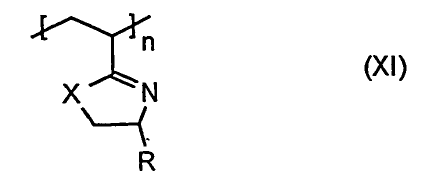 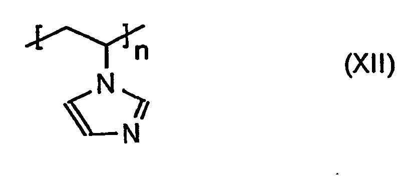 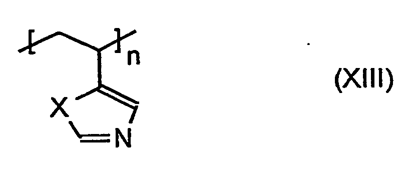 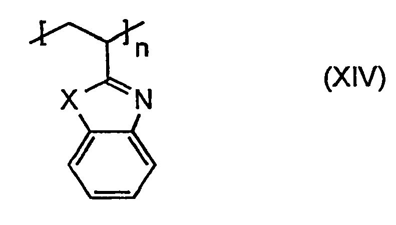 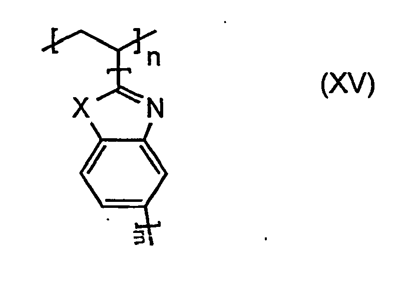 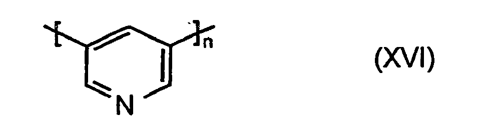 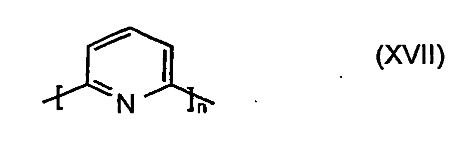 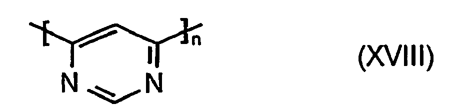 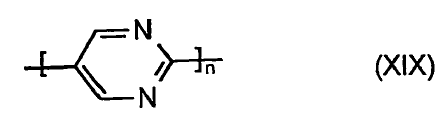 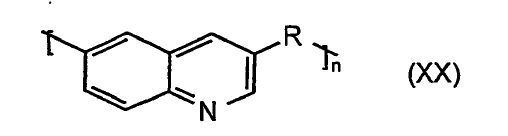 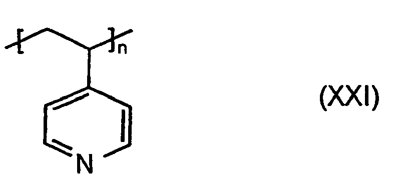 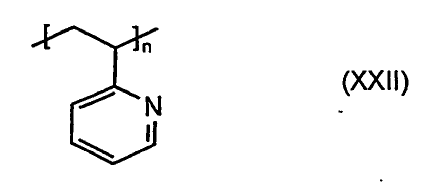
worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht mit der Maßgabe, dass R in Formel XX eine divalente Gruppe ist, und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthaiin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, lsoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-NaPhthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch dienachfolgende Formeln wiedergegeben: 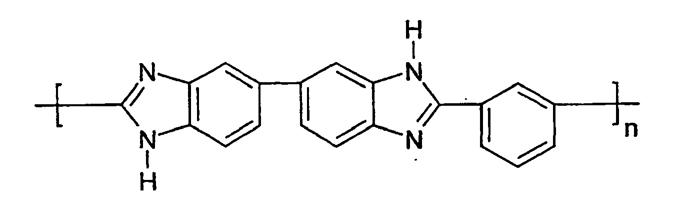 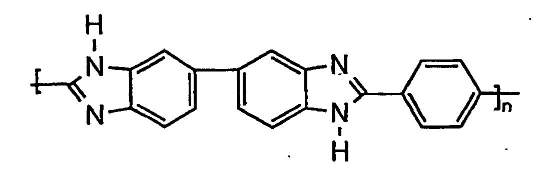 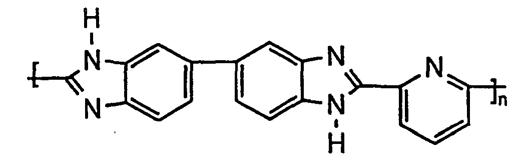 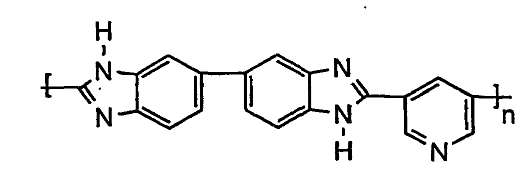 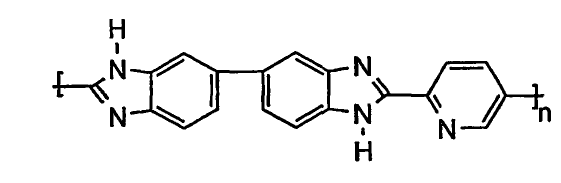 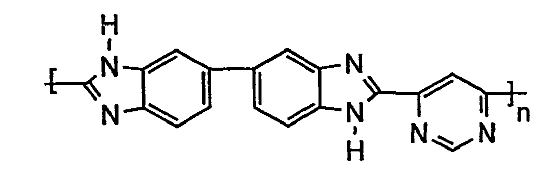 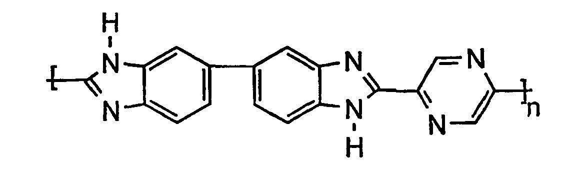 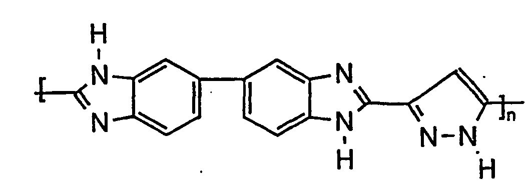 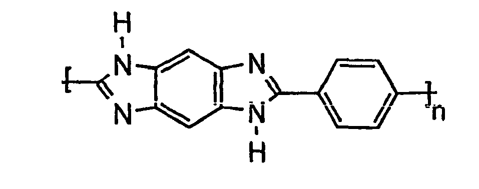 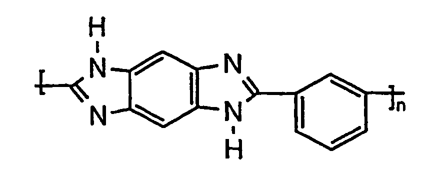 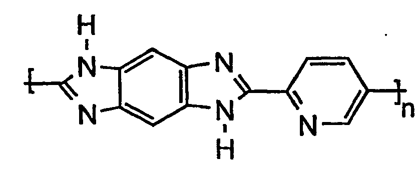 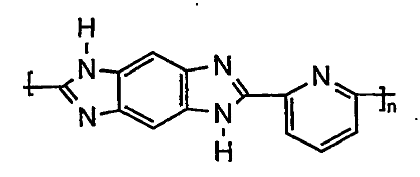 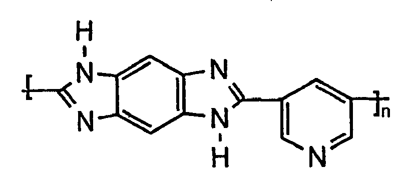 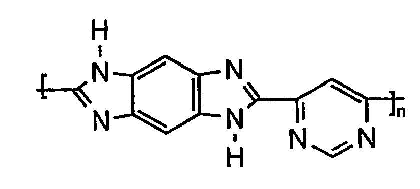 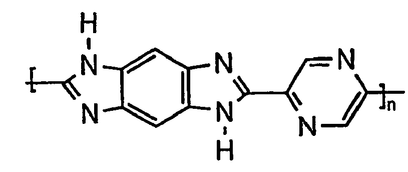 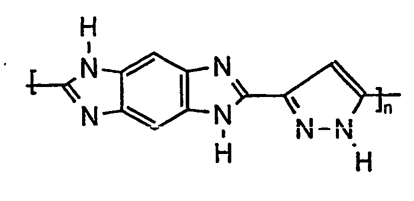 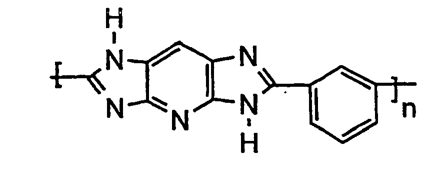 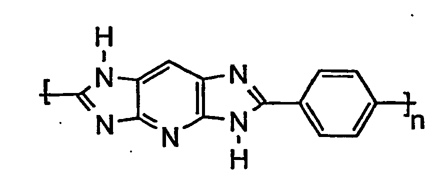 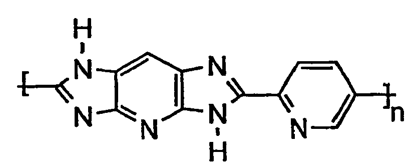 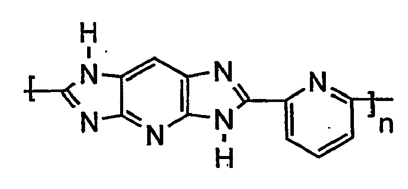 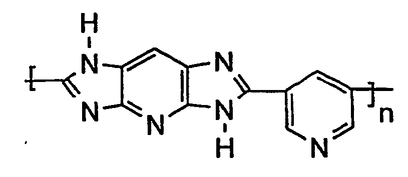 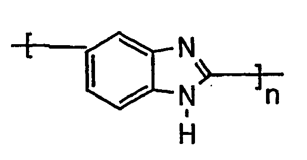 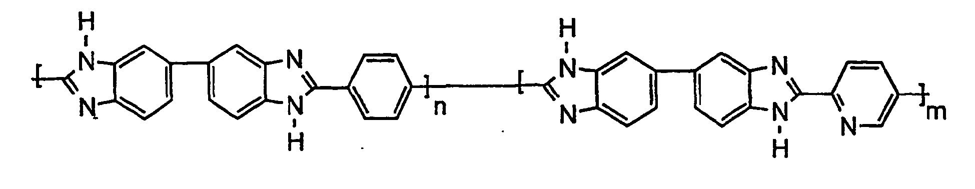 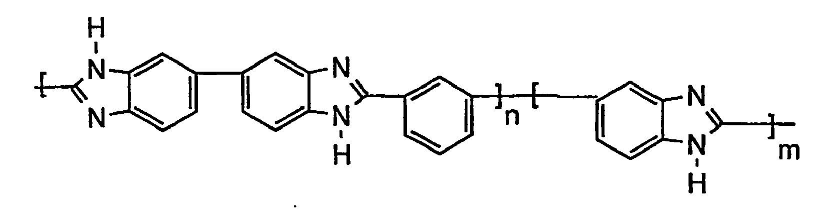
wobei n und m eine ganze Zahl größer gleich 10, vorzugsweise größer gleich 100 ist.

Die mittels des beschriebenen Verfahrens erhältlichen Polyazole, insbesondere jedoch die Polybenzimidazole zeichnen sich im allgemeinen durch ein hohes Molekulargewicht aus. Gemessen als Intrinsische Viskosität beträgt diese vorzugsweise mindestens 0,2 dl/g, bevorzugt 0,7 bis 10 dl/g, insbesondere 0,8 bis 5 dl/g.

Insofern die Mischung gemäß Schritt A) auch Tricarbonsäuren bzw. Tetracarbonsäre enthält wird hierdurch eine Verzweigung/ Vernetzung des gebildeten Polymeren erzielt. Diese trägt zur Verbesserung der mechanischen Eigenschaft bei.

Die in Schritt A) erhaltene Mischung wird gemäß Schritt B) auf eine Temperatur von bis zu 350°C, vorzugsweise bis zu 280°C, insbesondere bis zu 200°C und bevorzugt im Bereich von 100°C bis 250°C und besonders bevorzugt im Bereich von 100°C bis 200°C erhitzt. Hierbei wird ein Inertgas, beispielsweise Stickstoff oder ein Edelgas, wie Neon, Argon, eingesetzt.

Der Schritt B) dient zur Umsetzung der Carbonsäuregruppen mit den Aminogruppen. Bei dieser Reaktion wird Wasser freigesetzt. Gemäß einem besonderen Aspekt der vorliegenden Erfindung wird das in Schritt B) gebildete Wasser aus dem Reaktionsgleichgewicht entfernt. Methoden sind in der Fachwelt weit verbreitet. Beispielsweise kann das Wasser abdestilliert werden. Des weiteren kann das Wasser durch Trockenmittel gebunden werden. Je nach Art des Trockenmittels kann dieses in der Reaktionsmischung verbleiben oder von der Reaktionsmischung abgetrennt werden. Als Trockenmittel kann unter anderem Phosphorpentoxid (P₂O₅) oder Kieselgel eingesetzt werden.

In einer Variante des Verfahrens kann die Erwärmung gemäß Schritt B) nach der Bildung eines flächigen Gebildes gemäß Schritt C) erfolgen.

In einer weiteren Ausführungsform der Erfindung können zur Vernetzung befähigte Monomere eingesetzt werden. Je nach Temperaturstabilität des Monomeren können diese der Mischung gemäß Schritt A) oder nach der Herstellung der Polyazole gemäß Schritt B) beigefügt werden. Darüber hinaus können die zur Vernetzung befähigten Monomere auch auf das flächige Gebildes gemäß Schritt C) aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel 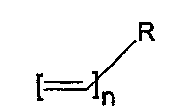 Dimethylacrylate, Trimethylycrylate, Tetramethylacrylate der Formel 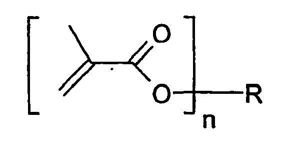 Diacrylate, Triacrylate, Tetraacrylate der Formel 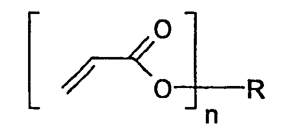
worin
- R: eine C1-C15-Alkylgruppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15-Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.%, vorzugsweise 0,1 bis 20 Gew.%, besonders bevorzugt 1 und 10 Gew.%, bezogen auf das Gewicht der vinylhaltigen Phosphonsäure, eingesetzt werden können.

Die in Schritt A) erzeugte Mischung des Polymeren kann eine Lösung darstellen, wobei in dieser Mischung auch noch dispergiertes oder suspendiertes Polymer enthalten sein kann.

Zu den bevorzugten Polymeren gehören unter anderem Polyolefine, wie Poly(chloropren), Polyacetylen, Polyphenylen, Poly(p-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyvinyldifluorid, Polyhexafluorpropylen, Polyethylentetrafluorethylen, Copolymere von PTFE mit Hexafluoropropylen, mit Perfluorpropylvinylether, mit Trifluoronitrosomethan, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbomen; Polymere mit C-O-Bindungen in der Hauptkette, beispielsweise polyacetal, Polyoxymethylen, Polyether, Polypropylenoxid, Polyepichlorhydrin, Polytetrahydrofuran, Polyphenylenoxid, Polyetherketon, Polyetheretherketon, Polyetherketonketon, Polyetheretherketonketon, Polyetherketonetherketonketon, Polyester, insbesondere Polyhydroxyessigsäure, Polyethylenterephthalat, Polybutylenterephthalat, Polyhydroxybenzoat, Polyhydroxypropionsäure, Polypropionsäure, Polypivalolacton, Polycaprolacton, Furan-Harze, Phenol-Aryl-Harze, Polymalonsäure, Polycarbonat;
Polymere C-S-Bindungen in der Hauptkette, beispielsweise Polysulfidether; Polyphenylensulfid, Polyethersulfon, Polysulfon, Polyetherethersulfon, Polyarlyethersulfon, Polyphenylensulfon, Polyphenylensulfidsulfon, Poly(phenylsulfid-1,4-phenylen;
Polymere C-N-Bindungen in der Hauptkette, beispielsweise Polyimine, Polyisocyanide, Polyetherimin, Polyetherimide, Poly(trifluoro-methyl-bis(phthalimid)-phenyl, Polyanilin, Polyaramide, Polyamide, Polyhydrazide, Polyurethane, Polyimide, Polyazole, Polyazoletherketon, Polyharnstoffe, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt A), Schritt B), Schritt C) und/oder Schritt D) erfolgen. Des weiteren können diese Additive, falls diese in flüssiger Form vorliegen, auch nach der Polymerisation gemäß Schritt D) beigefügt werden.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenide und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂, |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine-, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Polymerisation gemäß Schritt D) höchstens 80 Gew.%, vorzugsweise höchstens 50 Gew.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Etectrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)
Nicht limitierende Beispiele für perfluorierte Additive sind:
Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Die Bildung des flächigen Gebildes gemäß Schritt B) erfolgt mittels an sich bekannter Maßnahmen (Gießen, Sprühen, Rakeln, Extrusion) die aus dem Stand der Technik zur Polymerfilm-Herstellung bekannt sind. Dementsprechend ist die Mischung zur Bildung eines flächigen Gebildes geeignet. Die Mischung kann dementsprechend eine Lösung oder eine Suspension darstellen, wobei der Anteil der schlechtlöslichen Bestandteile auf Mengen beschränkt ist, die die Bildung flächiger Gebilde erlauben. Als Träger sind alle unter den Bedingungen als inert zu bezeichnenden Träger geeignet. Zu diesen Trägem gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP).

Zur Einstellung der Viskosität kann die Mischung gegebenenfalls mit Wasser und/oder einem leicht verdampfbaren organischen Lösungsmittel versetzt werden. Hierdurch kann die Viskosität auf den gewünschten Wert eingestellt und die Bildung der Membran erleichtert werden.
Die Dicke des flächigen Gebildes beträgt im allgemeinen zwischen 15 und 2000 µm, vorzugsweise zwischen 30 und 1500 µm, insbesondere zwischen 50 und 1200 µm, ohne dass hierdurch eine Beschränkung erfolgen soll.

Die Polymerisation der vinylhaltigen Phosphonsäure in Schritt D) erfolgt vorzugsweise radikalisch. Die Radikalbildung kann thermisch, photochemisch, chemisch und/oder elektrochemisch erfolgen.

Beispielsweise kann eine Starterlösung, die mindestens eine zur Bildung von Radikalen befähigte Substanz enthält, nach der Erwärmung der Lösung und/oder Dispersion gemäß Schritt B) der Mischung beigefügt werden. Des weiteren eine Starterlösung auf das nach Schritt C) erhaltene flächige Gebilde aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des weiteren können auch Radikalbildner eingesetzt werden, die bei Bestrahlung Radikale bilden. Zu den bevorzugten Verbindungen gehören unter anderem α,α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6 trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf das Gewicht der vinylhaltigen Phosphonsäure) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,γ- und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der vinylhaltigen Phosphonsäure in Schritt D) erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung des flächigen Gebildes, wobei diese Verfestigung durch Mikrohärtemessung verfolgt werden kann. Vorzugsweise beträgt die durch die Polymerisation bedingte Zunahme der Härte mindestens 20%, bezogen auf die Härte des in Schritt B) erhaltenen flächigen Gebildes.

Gemäß einer besonderen Ausführungsform der vorliegenden Erfindung weisen die Membranen eine hohe mechanische Stabilität auf. Diese Größe ergibt sich aus der Härte der Membran, die mittels Mikrohärtemessung gemäss DIN 50539 bestimmt wird. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 0,01 N/mm², bevorzugt mindestens 0,1 N /mm² und ganz besonders bevorzugt mindestens 1 N /mm², ohne dass hierdurch eine Beschränkung erfolgen soll. In der Folge wird die Kraft während 5 s konstant bei 3 mN gehalten und das Kriechen aus der Eindringtiefe berechnet. Bei bevorzugten Membranen beträgt das Kriechen C_{HU} 0,003/20/5 unter diesen Bedingungen weniger als 20%, bevorzugt weniger als 10% und ganz besonders bevorzugt weniger als 5%. Der mittels Mikrohärtemessung bestimmte Modul beträgt YHU mindestens 0,5 MPa, insbesondere mindestens 5 MPa und ganz besonders bevorzugt mindestens 10 MPa, ohne dass hierdurch eine Beschränkung erfolgen soll.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts Mₙ, das durch GPC-Methoden ermittelt werden kann. Aufgrund der Probleme die in der Membran enthaltene Polyvinylphosphonsäure ohne Abbau zu isolieren, wird dieser Wert anhand einer Probe bestimmt, die durch Polymerisation von Vinylphosphonsäure ohne Lösungsmittel und ohne Zusatz von Polymer durchgeführt wird. Hierbei wird der Gewichtsanteil an Vinylphosphonsäure und an Radikalstarter im Vergleich zu den Verhältnissen nach Lösen der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzte vinylhaltige Phosphonsäure.

Die Polymerisation in Schritt D) kann zu einer Abnahme der Schichtdicke führen. Vorzugsweise beträgt die Dicke der selbsttragenden Membran zwischen 15 und 1000 µm, vorzugsweise zwischen 20 und 500 µm, insbesondere zwischen 30 und 250 µm.

Vorzugsweise ist die gemäß Schritt D) erhaltene Membran selbsttragend, d.h. sie kann vom Träger ohne Beschädigung gelöst und anschließend gegebenenfalls direkt weiterverarbeitet werden.

Im Anschluss an die Polymerisation gemäß Schritt D) kann die Membran thermisch, photochemisch, chemisch und/oder elektrochemisch an der Oberfläche vernetzt werden. Diese Härtung der Membranoberfläche verbessert die Eigenschaften der Membran zusätzlich.

Gemäß einem besonderen Aspekt kann die Membran auf eine Temperatur von mindestens 150°C, vorzugsweise mindestens 200°C und besonders bevorzugt mindestens 250°C erwärmt werden. Vorzugsweise erfolgt die thermische Vernetzung in Gegenwart von Sauerstoff. Die Sauerstoffkonzentration liegt bei diesem Verfahrensschritt üblich im Bereich von 5 bis 50 Vol.-%, vorzugsweise 10 bis 40 Vol.%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) und/oder UV-Licht erfolgen. Eine weitere Methode ist die Bestrahlung mit β-,γ- und/oder Elektronen Strahlen. Die Strahlungsdosis beträgt hierbei vorzugsweise zwischen 5 und 200 kGy, insbesondere 10 bis 100 kGy. Die Bestrahlung kann an Luft oder unter Inertgas erfolgen. Hierdurch werden die Gebrauchseigenschaften der Membran, insbesondere deren Haltbarkeit verbessert.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Gemäß einer besonderen Ausführungsform der vorliegenden Erfindung umfasst die Membran mindestens 3 Gew.-%, vorzugsweise mindestens 5 Gew.% und besonders bevorzugt mindestens 7 Gew.-% Phosphor (als Element), bezogen auf das Gesamtgewicht der Membran. Der Anteil an Phosphor kann über eine Elementaranalyse bestimmt werden. Hierzu wird die Membran bei 110°C für 3 Stunden im Vakuum (1 mbar) getrocknet.

Die erfindungsgemäße Polymermembran weist verbesserte Materialeigenschaften gegenüber den bisher bekannten dotierten Polymermembranen auf. Insbesondere zeigen sie im Vergleich mit bekannten undotierten Polymermembranen bereits eine intrinsische Leitfähigkeit. Diese begründet sich insbesondere durch vorhandenen Phosphonsäuregruppen enthaltende Polymere.

Die Eigenleitfähigkeit der erfindungsgemäßen Membran beträgt mindestens 0,001 S/cm, bevorzugt mindestens 10 mS/cm, insbesondere mindestens 20 mS/cm bei einer Temperatur von 120°C.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Die Durchtritts-Stromdichte beträgt bei Betrieb mit 0,5 M Methanollösung und 90°C in einer so genannten flüssigen Direktmethanolbrennstoffzelle vorzugsweise weniger als 100 mA/cm², insbesondere weniger als 70 mA/cm² besonders bevorzugt weniger als 50 mA/cm² und ganz besonders bevorzugt weniger als 10 mA/cm²: Die Durchtritts-Stromdichte beträgt bei Betrieb mit einer 2 M Methanollösung und 160°C in einer so genannten gasförmigen Direktmethanolbrennstoffzelle vorzugsweise weniger als 100 mA/cm², insbesondere weniger als 50 mA/cm² ganz besonders bevorzugt weniger als 10 mA/cm².

Zur Bestimmung der Durchtritts-Stromdichte (cross over current density) wird die Kohlendioxidmenge, die an der Kathode freigesetzt wird, mittels eines CO₂-Sensors gemessen. Aus dem so erhaltenen Wert der CO₂-Menge wird, wie von P. Zelenay, S.C. Thomas, S. Gottesfeld in S. Gottesfeld, T.F. Fuller "Proton Conducting Membrane Fuel Cells II" ECS Proc. Vol. 98-27 S. 300-308 beschrieben, die Durchtritts-Stromdichte berechnet.

Zu möglichen Einsatzgebieten der erfindungsgemäßen intrinsich leitfähigen Polymermembranen gehören unter anderem die Verwendung in Brennstoffzellen, bei der Elektrolyse, in Kondensatoren und in Batteriesystemen. Aufgrund ihres Eigenschaftsprofils können die Polymermembranen vorzugsweise in Brennstoffzellen, insbesondere in DMBZ-Brennstoffzellen (Direkt-Methanol-Brennstoffzelle), verwendet werden. -

Die vorliegende Erfindung betrifft auch eine Membran-Elektroden-Einheit, die mindestens eine erfindungsgemäße Polymermembran aufweist. Die Membran-Elektroden-Einheit weist eine hohe Leistungsfähigkeit auch bei einem geringen Gehalt an katalytisch aktiven Substanzen, wie beispielsweise Platin, Ruthenium oder Palladium, auf. Hierzu können mit einer katalytisch aktiven Schicht versehene Gasdiffusionslagen eingesetzt werden.

Die Gasdiffusionslage zeigt im allgemeinen eine Elektronenleitfähigkeit. Üblich werden hierfür flächige, elektrisch leitende und säureresistente Gebilde eingesetzt. Zu diesen gehören beispielsweise Kohlefaser-Papiere, graphitisierte Kohlefaser-Papiere, Kohlefasergewebe, graphitisierte Kohlefasergewebe und/oder flächige Gebilde, die durch Zugabe von Ruß leitfähig gemacht wurden.

Die katalytisch aktive Schicht enthält eine katalytisch aktive Substanz. Zu diesen gehören unter anderem Edelmetalle, insbesondere Platin, Palladium, Rhodium, Iridium und/oder Ruthenium. Diese Substanzen können auch in Form von Legierungen unter einander eingesetzt werden. Des weiteren können diese Substanzen auch in Legierung mit unedlen Metallen, wie beispielsweise Cr, Zr, Ni, Co und/oder Ti verwendet werden. Darüber hinaus können auch die Oxide der zuvor genannten Edelmetalle und/oder unedlen Metalle eingesetzt werden. Gemäß einem besonderen Aspekt der vorliegenden Erfindung werden die katalytisch aktiven Verbindungen in Form von Partikeln eingesetzt, die vorzugsweise eine Größe im Bereich von 1 bis 1000 nm, insbesondere 10 bis 200 nm und bevorzugt 20 bis 100 nm aufweisen.

Des weiteren kann die katalytisch aktive Schicht übliche Additive enthalten. Hierzu gehören unter anderem Fluorpolymere wie z.B. Polytetrafluorethylen (PTFE) und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm², vorzugsweise 0,2 bis 6,0 mg/cm² und besonders bevorzugt 0,3 bis 3,0 mg/cm². Diese Werte können durch Elementaranalyse einer flächigen Probe bestimmt werden.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

In einer weiteren Variante kann auf die erfindungsgemäße Membran eine katalytisch aktive Schicht aufgebracht werden und diese mit einer Gasdiffusionslage verbunden werden.

In einer Variante der vorliegenden Erfindung kann die Membranbildung anstelle auf einem Träger auch direkt auf der Elektrode erfolgen. Die Behandlung gemäß Schritt D) kann hierdurch entsprechend verkürzt werden oder aber die Menge an Starterlösung reduziert werden, da die Membran nicht mehr selbsttragend sein muß. Auch eine solche Membran, respektive eine Elektrode die mit einer solchen erfindungsgemäßen Polymermembran beschichtet ist, ist Gegenstand der vorliegenden Erfindung.

Weiterhin ist es auch möglich die Polymerisation der vinylhaltigen Phosphonsäure in der laminierten Membran-Elektroden-Einheit durchzuführen. Hierzu wird die Lösung auf die Elektrode aufgebracht und mit der zweiten, ggf. ebenfalls beschichteten Elektrode zusammengebracht und verpresst. Anschließend wird die Polymerisation in der laminierten Membran-Elektroden-Einheit wie vorstehend beschrieben durchgeführt.

Die Beschichtung hat eine Dicke zwischen 2 und 500 µm, vorzugsweise zwischen 5 und 300 µm, insbesondere zwischen 10 und 200 µm hat. Die ermöglicht den Einsatz in sogenannten Mikro-Brennstoffzellen, insbesondere in DMBZ-Mikrobrennstoffzellen.

Eine derartig beschichtete Elektrode kann in einer Membran-Elektroden-Einheit, die gegebenenfalls mindestens eine erfindungsgemäße Polymermembran aufweist, eingebaut werden.

In einer weiteren Variante kann auf die erfindungsgemäße Membran eine katalytisch aktive Schicht aufgebracht werden und diese mit einer Gasdiffusionslage verbunden werden. Hierzu wird gemäß den Schritten A) bis D) eine Membran gebildet und der Katalysator aufgebracht. In einer Variante kann der Katalysator vor oder zusammen mit der Starterlösung aufgebracht werden. Auch diese Gebilde sind Gegenstand der vorliegenden Erfindung.

Darüber hinaus kann die Bildung der Membran gemäß den Schritten A) bis D) auch auf einem Träger oder einer Trägerfolie erfolgen, die bereits den Katalysator aufweist. Nach Entfernen des Trägers bzw. der Trägerfolie befindet sich der Katalysator auf der erfindungsgemäßen Membran. Auch diese Gebilde sind Gegenstand der vorliegenden Erfindung.

Ebenfalls Gegenstand der vorliegenden Erfindung ist eine Membran-Elektroden-Einheit, die mindestens eine beschichtete Elektrode und/oder mindestens eine erfindungsgemäße Polymermembran in Kombination mit einer weiteren Polymermembran auf Basis von Polyazolen oder einer Polymerblendmembran enthaltend mindestens ein Polymer auf Basis von Polyazolen aufweist.

## Patentansprüche

1. Protonenleitende Polymermembran umfassend Phosphonsäuregruppen enthaltende Polymere erhältlich durch ein Verfahren umfassend die Schritte
A) Mischen von vinylhaltiger Phosphonsäure mit einem oder mehreren aromatischen Tetra-Amino-Verbindungen mit einer oder mehreren aromatischen Carbonsäuren, deren Estern, deren Säurehalogenide oder deren Säureanhydride, die mindestens zwei Säuregruppen pro Carbonsäure-Monomer enthalten, und/oder
Mischen von vinylhaltiger Phosphonsäure mit einer oder mehreren aromatischen und/oder heteroaromatischen Diaminocarbonsäuren, deren Estern, deren Säurehalogenide oder deren Säureanhydride,
B) Erwärmen der Mischung erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einem Träger,
D) Polymerisation der in dem flächigen Gebilde erhältlich gemäß Schritt C) vorhandenen vinylhaltigen Phosphonsäure.

2. Membran gemäß Anspruch 1, **dadurch gekennzeichnet, dass** als aromatische Tetra-Amino-Verbindungen 3,3',4,4`-Tetraaminobiphenyl, 2,3,5,6-Tetraaminopyridin, 1,2,4,5-Tetraarninobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan eingesetzt wird.

3. Membran gemäß Anspruch 1 oder 2, **dadurch gekennzeichnet, dass** als aromatische Carbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, oder deren C1-C20-Alkyl-Ester, deren C5-C12-Aryl-Ester, deren Säureanhydride oder deren Säurechloride eingesetzt werden.

4. Membran gemäß einem oder mehreren der vorhergehenden Ansprüche, **dadurch gekennzeichnet, dass** als aromatische Carbonsäure Tricarbonsäuren, deren C1-C20-Alkyl-Ester, deren C5-C12-Aryl-Ester deren Säureanhydride oder deren Säurechloride oder Tetracarbonsäuren, deren C1-C20-Alkyl-Ester, deren C5-C12-Aryl-Ester, deren Säureanhydride oder deren Säurechloride eingesetzt werden.

5. Membran gemäß Anspruch 4, **dadurch gekennzeichnet, dass** als aromatische
Carbonsäure 1,3,5-Benzoltricarbonsäure (trimesic acid);
2,4,5-Benzoltricarbonsäure (trimellitic acid);
(2-Carboxyphenyl)iminodiessigsäure, 3,5,3'-Biphenyltricarbonsäure; 3,5,4'-Biphenyltricarbonsäure 2,4,6-Pyridintricarbonsäure, Benzol-1,2,4,5-tetracarbonsäuren; Naphthalin-1,4,5,8-tetracarbonsäuren, 3,5,3',5'-Biphenyltetracarbonsäuren, Benzophenontetracarbonsäure, 3,3',4,4'-Biphenyltetracarbonsäure, 2,2',3,3'-Biphenyltetracarbonsäure, 1,2,5,6-Naphthalintetracarbonsäure und/oder 1,4,5,8-Naphthalintetracarbonsäure eingesetzt werden.

6. Membran gemäß 4, **dadurch gekennzeichnet, dass** der Gehalt an Tricarbonsäure und/oder Tetracarbonsäuren zwischen 0 und 30 Mol-%, vorzugsweise 0,1 und 20 Mol-%, insbesondere 0,5 und 10 Mol-%, bezogen auf eingesetzte Dicarbonsäure, beträgt.

7. Membran gemäß Anspruch 1, **dadurch gekennzeichnet, dass** als heteroaromatische Carbonsäuren heteroaromatische Dicarbonsäuren, heteroaromatische Tricarbonsäuren und/oder heteroaromatische Tetracarbonsäuren eingesetzt werden, welche mindestens ein Stickstoff, Sauerstoff, Schwefel oder Phosphoratom im Aromaten enthalten.

8. Membran gemäß Anspruch 7 **dadurch gekennzeichnet, dass** Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride eingesetzt werden.

9. Membran gemäß Anspruch 1, **dadurch gekennzeichnet, dass** als aromatische Diaminocarbonsäure Diaminobenzoesäure und/oder deren Mono- und Dihydrochloridderivate eingesetzt werden.

10. Membran gemäß Anspruch 1, **dadurch gekennzeichnet, dass** die in Schritt A) und/oder Schritt B) hergestellte Mischung Verbindungen der Formel 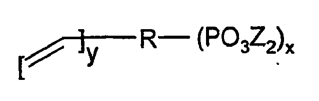
worin
R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet
und/oder der Formel 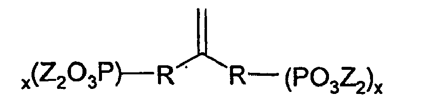
worin
R eine Bindung, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,
und/oder der Formel 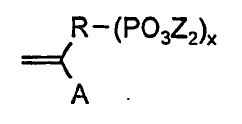
worin
A eine Gruppe der Formeln COOR², CN, CONR²₂, OR² und/oder R² darstellt,
worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können,
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet,
enthält.

11. Membran gemäß Anspruch 1, **dadurch gekennzeichnet, dass** zur Vernetzung befähigte Monomere in Schritt D) polymerisiert werden, die mindestens 2 Kohlenstoff-Kohlenstoff Doppelbindungen aufweisen.

12. Membran gemäß Anspruch 1, **dadurch gekennzeichnet, daß** die Polymerisation gemäß Schritt D) durch eine Substanz bewirkt wird, die zur Bildung von Radikalen befähigt ist.

13. Membran gemäß Anspruch 1, **dadurch gekennzeichnet, daß** die Polymerisation gemäß Schritt D) durch Bestrahlung mit IR- bzw. NIR-Licht, UV-Licht, β-,γ- und/oder Elektronen Strahlen erfolgt.

14. Membran gemäß Anspruch 1, **dadurch gekennzeichnet, dass** die in Schritt A) und/oder Schritt B) erzeugte Mischung gelöstes, dispergiertes und/oder suspendiertes Polymer enthält.

15. Membran gemäß Anspruch 1, **dadurch gekennzeichnet, dass** in Schritt C) eine Schicht mit einer Dicke von 20 und 4000 µm, vorzugsweise zwischen 30 und 3500 µm, insbesondere zwischen 50 und 3000 µm erzeugt wird.

16. Membran gemäß Anspruch 1, **dadurch gekennzeichnet, dass** die nach Schritt D) gebildete Membran eine Dicke zwischen 15 und 3000 µm, vorzugsweise zwischen 20 und 2000 µm, insbesondere zwischen 20 und 1500 µm hat.

17. Elektrode mit einer protonenleitenden Polymerbeschichtung auf Basis von Polyazolen erhältlich durch ein Verfahren umfassend die Schritte
A) Mischen von einem oder mehreren aromatischen Tetra-Amino-Verbindungen mit einer oder mehreren aromatischen Carbonsäuren, deren Estern, deren Säurehalogenide oder deren Säureanhydride, die mindestens zwei Säuregruppen pro Carbonsäure-Monomer enthalten, oder Mischen von einer oder mehreren aromatischen und/oder heteroaromatischen Diaminocarbonsäuren, deren Estern, deren Säurehalogenide oder deren Säureanhydride, und mit vinylhaltiger Phosphonsäure,
B) Erwärmen der Mischung erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einer Elektrode,
D) Polymerisation der vinylhaltigen Phosphonsäure.

18. Elektrode gemäß Anspruch 17, wobei die Beschichtung eine Dicke zwischen 2 und 3000 µm, vorzugsweise zwischen 3 und 2000 µm, insbesondere zwischen 5 und 1500 µm hat.

19. Membran-Elektroden-Einheit enthaltend mindestens eine Elektrode und mindestens eine Membran gemäß einem oder mehreren der Ansprüche 1 bis 16.

20. Membran-Elektroden-Einheit enthaltend mindestens eine Elektrode gemäß Anspruch 17 oder 18 und mindestens eine Membran gemäß einem oder mehreren der Ansprüche 1 bis 16.

21. Brennstoffzelle enthaltend eine oder mehrere Membran-Elektroden-Einheiten gemäß Anspruch 19 oder 20.

22. Verfahren zur Herstellung von protonen leitenden Polymermembranen umfassend Phosphonsäuregruppen enthaltende Polymere umfassend die Schritte
A) Mischen von einem oder mehreren aromatischen Tetra-Amino-Verbindungen mit einer oder mehreren aromatischen Carbonsäuren, deren Estern, deren Säurehalogenide oder deren Säureanhydride, die mindestens zwei Säuregruppen pro Carbonsäure-Monomer enthalten, oder Mischen von einer oder mehreren aromatischen und/oder heteroaromatischen Diaminocarbonsäuren, deren Estern, deren Säurehalogenide oder deren Säureanhydride, und mit vinylhaltiger Phosphonsäure,
B) Erwärmen der Mischung erhältlich gemäß Schritt A) unter Inertgas auf Temperaturen von bis zu 350°C unter Ausbildung von Polyazol-Polymeren,
C) Aufbringen einer Schicht unter Verwendung der Mischung gemäß Schritt A) und/oder B) auf einem Träger,
D) Polymerisation der vinylhaltigen Phosphonsäure.

## Claims

1. A proton-conducting polymer membrane comprising polymers containing phosphonic acid groups which is obtainable by a process comprising the steps
A) mixing of vinyl-containing phosphonic acid with one or more aromatic tetraamino compounds with one or more aromatic carboxylic acids, esters thereof, acid halides thereof or anhydrides thereof which contain at least two acid groups per carboxylic acid monomer, and/or mixing of vinyl-containing phosphonic acid with one or more aromatic and/or heteroaromatic diamino carboxylic acids, esters thereof, acid halides thereof or anhydrides thereof,
B) heating of the mixture obtainable according to step A) under inert gas at temperatures of up to 350°C to form polyazole polymers,
C) application of a layer using the mixture from step A) and/or B) to a support,
D) polymerization of the vinyl-containing phosphonic acid present in the sheet-like structure obtainable according to step C).

2. The membrane as claimed in claim 1, **characterized in that** 3,3',4,4'-tetraaminobiphenyl, 2,3,5,6-tetraaminopyridine, 1,2,4,5-tetraaminobenzene, bis(3,4-diaminophenyl) sulfone, bis(3,4-diaminophenyl) ether, 3,3',4,4'-tetraaminobenzophenone, 3,3',4,4'-tetraaminodiphenylmethane and 3,3',4,4'-tetraaminodiphenyldimethylmethane are used as aromatic tetraamino compounds.

3. The membrane as claimed in claim 1 or 2, **characterized in that** isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterephthalic acid, tetrafluorophthalic acid, tetrafluoroisophthalic acid, tetrafluoroterephthalic acid, 1,4-naphthalenedicarboxylic acid, 1,5-naphthalenedicarboxylic acid, 2,6-naphthalenedicarboxylic acid, 2,7-naphthalenedicarboxylic acid, diphenic acid, 1,8-dihydroxynaphthalene-3,6-dicarboxylic acid, bis(4-carboxyphenyl) ether, benzophenone-4,4'-dicarboxylic acid, bis(4-carboxyphenyl) sulfone, biphenyl-4,4'-dicarboxylic acid, 4-trifluoromethylphthalic acid, 2,2-bis(4-carboxyphenyl)hexafluoropropane, 4,4'-stilbenedicarboxylic acid, 4-carboxycinnamic acid, or C1-C20-alkyl esters or C5-C12-aryl esters thereof, or anhydrides thereof or acid chlorides thereof are used as aromatic carboxylic acids.

4. The membrane as claimed in one or more of the preceding claims,
**characterized in that** tricarboxylic acids, C1-C20-alkyl esters thereof, C5-C12-aryl esters thereof, anhydrides thereof or acid chlorides thereof or tetracarboxylic acids, C1-C20-alkyl esters thereof, C5-C12-aryl esters thereof, anhydrides thereof or acid chlorides thereof are used as aromatic carboxylic acids.

5. The membrane as claimed in claim 4, **characterized in that** 1,3,5-benzenetricarboxylic acid (trimesic acid); 2,4,5-benzenetricarboxylic acid (trimellitic acid); (2-carboxyphenyl)iminodiacetic acid, 3,5,3'-biphenyltricarboxylic acid; 3,5,4'-biphenyltricarboxylic acid, 2,4,6-pyridinetricarboxylic acid, benzene-1,2,4,5-tetracarboxylic acid; naphthalene-1,4,5,8-tetracarboxylic acid, 3,5,3',5'-biphenyltetracarboxylic acid, benzophenonetetracarboxylic acid, 3,3',4,4'-biphenyltetracarboxylic acid, 2,2',3,3'-biphenyltetracarboxylic acid, 1,2,5,6-naphthalenetetracarboxylic acid and/or 1,4,5,8-naphthalenetetracarboxylic acid are used as aromatic carboxylic acids.

6. The membrane as claimed in claim 4, **characterized in that** the content of tricarboxylic acids and/or tetracarboxylic acids is in the range from 0 to 30 mol%, preferably from 0.1 to 20 mol%, in particular from 0.5 to 10 mol%, based on dicarboxylic acid used.

7. The membrane as claimed in claim 1, **characterized in that** heteroaromatic dicarboxylic acids, heteroaromatic tricarboxylic acids and/or heteroaromatic tetracarboxylic acids containing at least one nitrogen, oxygen, sulfur or phosphorus atom in the aromatic are used as heteroaromatic carboxylic acids.

8. The membrane as claimed in claim 7, **characterized in that** pyridine-2,5-dicarboxylic acid, pyridine-3,5-dicarboxylic acid, pyridine-2,6-dicarboxylic acid, pyridine-2,4-dicarboxylic acid, 4-phenyl-2,5-pyridinedicarboxylic acid, 3,5-pyrazoledicarboxylic acid, 2,6-pyrimidinedicarboxylic acid, 2,5-pyrazinedicarboxylic acid; 2,4,6-pyridinetricarboxylic acid, benzimidazole-5,6-dicarboxylic acid, and also C1-C20-alkyl esters or C5-C12-aryl esters thereof, or anhydrides thereof or acid chlorides thereof or C1-C20-alkyl esters or C5-C12-aryl esters thereof or anhydrides thereof or acid chlorides thereof are used.

9. The membrane as claimed in claim 1, **characterized in that** diaminobenzoic acid and/or monohydrochloride and dihydrochloride derivatives thereof are used as aromatic diamino carboxylic acids.

10. The membrane as claimed in claim 1, **characterized in that** the mixture prepared in step A) and/or step B) comprises compounds of the formula 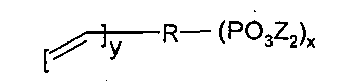
where
R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, NZ₂,
the radicals Z are each, independently of one another, hydrogen, a C1-C15-alkyl group, C1-C15-alkoxy group, ethylenoxy group or C5-C20-aryl or hetero-aryl group, with the above radicals themselves being able to be substituted by halogen, -OH, -CN, and
x is 1, 2, 3, 4, 5, 6, 7, 8, 9 or 10,
y is 1, 2, 3, 4, 5, 6, 7, 8, 9 or 10,
and/or of the formula 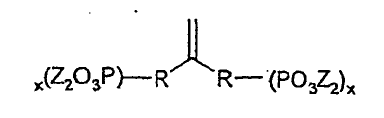
where
R is a bond, a C1-C15-alkyl group, C1-C15-alkoxy group, ethylenoxy group or C5-C20-aryl or heteroaryl group, with the above radicals themselves being able to be substituted by halogen, -OH, COOZ, -CN, NZ₂,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10,
and/or of the formula 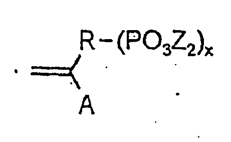
where
A is a group of the formulae COOR², CN, CONR²₂, OR² and/or R², where R² is hydrogen, a C1-C15-alkyl group, C1-C15-alkoxy group, ethylenoxy group or C5-C20-aryl or heteroaryl group, with the above radicals themselves being able to be substituted by halogen, -OH, COOZ, -CN, NZ₂,
R is a bond, a divalent C1-C15-alkylene group, divalent C1-C15-alkylenoxy group, for example ethylenoxy group, or divalent C5-C20-aryl or heteroaryl group, with the above radicals themselves being able to be substituted by halogen, -OH, COOZ, -CN, NZ₂,
the radicals Z are each, independently of one another, hydrogen, a C1-C15-alkyl group, C1-C15-alkoxy group, ethylenoxy group or C5-C20-aryl or heteroaryl group, with the above radicals themselves being able to be substituted by halogen, -OH, -CN, and
x is 1, 2, 3, 4, 5, 6, 7, 8, 9 or 10.

11. The membrane as claimed in claim 1, **characterized in that** monomers which are capable of effecting crosslinking and have at least 2 carbon-carbon double bonds are polymerized in step D).

12. The membrane as claimed in claim 1, **characterized in that** the polymerization in step D) is brought about by substance capable of forming free radicals.

13. The membrane as claimed in claim 1, **characterized in that** the polymerization in step D) is effected by irradiation with IR or NIR light, UV light, β-rays, γ- rays and/or electron beams.

14. The membrane as claimed in claim 1, **characterized in that** the mixture produced in step A) and/or step B) comprises dissolved, dispersed and/or suspended polymer.

15. The membrane as claimed in claim 1, **characterized in that** a layer having a thickness of from 20 to 4000 µm, preferably from 30 to 3500 µm, in particular from 50 to 3000 µm, is produced in step C).

16. The membrane as claimed in claim 1, **characterized in that** the membrane formed in step D) has a thickness in the range from 15 to 3000 µm, preferably from 20 to 2000 µm, in particular from 20 to 1500 µm.

17. An electrode having a proton-conducting polymer coating based on polyazoles which is obtainable by a process comprising the steps
A) mixing of one or more aromatic tetraamino compounds with one or more aromatic carboxylic acids, esters thereof, acid halides thereof or anhydrides thereof which contain at least two acid groups per carboxylic acid monomer or mixing of one or more aromatic and/or heteroaromatic diamino carboxylic acids, esters thereof, acid halides thereof or anhydrides thereof with vinyl-containing phosphonic acid,
B) heating of the mixture obtainable according to step A) under inert gas at temperatures of up to 350°C to form polyazole polymers,
C) application of a layer using the mixture from step A) and/or B) to an electrode,
D) polymerization of the vinyl-containing phosphonic acid.

18. The electrode as claimed in claim 17, wherein the coating has a thickness in the range from 2 to 3000 µm, preferably from 3 to 2000 µm, in particular from 5 to 1500 µm.

19. A membrane-electrode unit comprising at least one electrode and at least one membrane as claimed in one or more of claims 1 to 16.

20. A membrane-electrode unit comprising at least one electrode as claimed in claim 17 or 18 and at least one membrane as claimed in one or more of claims 1 to 6.

21. A fuel cell comprising one or more membrane-electrode units as claimed in claim 19 or 20.

22. A process for producing proton-conducting polymer membranes comprising polymers containing phosphonic acid groups, which comprises the steps
A) mixing of one or more aromatic tetraamino compounds with one or more aromatic carboxylic acids, esters thereof, acid halides thereof or anhydrides thereof which contain at least two acid groups per carboxylic acid monomer or mixing of one or more aromatic and/or heteroaromatic diamino carboxylic acids, esters thereof, acid halides thereof or anhydrides thereof with vinyl-containing phosphonic acid,
B) heating of the mixture obtainable according to step A) under inert gas at temperatures of up to 350°C to form polyazole polymers,
C) application of a layer using the mixture from step A) and/or B) to a support,
D) polymerization of the vinyl-containing phosphonic acid.

## Revendications

1. Membrane polymère conductrice de protons comprenant des polymères contenant des groupements acide phosphonique, que l'on peut obtenir par un procédé comprenant les étapes suivantes:
A) le mélange d'acide vinylphosphonique avec un ou plusieurs composés tétraaminés aromatiques avec un ou plusieurs acides carboxyliques aromatiques, leurs esters, leurs halogénures d'acide ou leurs anhydrides d'acide, qui contiennent au moins deux groupements acide par monomère d'acide carboxylique et/ou
le mélange d'acide vinylphosphonique avec un ou plusieurs acides diaminocarboxyliques aromatiques et/ou hétéroaromatiques, leurs esters, leurs halogénures d'acïde ou leurs anhydrides d'acide,
B) le chauffage du mélange que l'on peut obtenir à l'étape A) sous gaz inerte et à des températures jusqu'à 350°C en formant des polymères de polyazoles,
C) l'application d'une couche en utilisant le mélange de l'étape A) et/ou de l'étape B) sur un support, et
D) la polymérisation de l'acide vinylphosphonique présent dans l'objet plat que l'on peut obtenir à l'étape C).

2. Membrane selon la revendication 1, **caractérisée en ce que** l'on utilise comme composés tétraaminés aromatiques, le 3,3',4,4'-tétraamino-biphényle, la 2,3,5,6-tétraaminopyridine, le 1,2,4,5-tétraaminobenzène, la 3,3',4,4'-tétraaminodiphényl-sulfone, le 3,3',4,4'-tétraaminodiphényléther, la 3,3',4,4'-tétraaminobenzophénone, le 3,3',4,4'-tétraaminodiphénylméthane et le 3,3',4,4'-tétraamino-diphénylediméthylméthane.

3. Membrane selon la revendication 1 ou 2, **caractérisée en ce que** l'on utilise comme acides carboxyliques aromatiques, l'acide isophtalique, l'acide téréphtalique, l'acide phtalique, l'acide 5-hydroxyisophtalique, l'acide 4-hydroxyisophtalique, l'acide 2-hydroxytéréphtalique, l'acide 5-amino-isophtalique, l'acide 5-N,N-diméthylaminoisophtalique, l'acide 5-N,N-diéthylaminoisophtalique, l'acide 2,5-dihydroxytéréphtalique, l'acide 2,5-dihydroxy-isophtalique, l'acide 2,3-dihydroxyisophtalique, l'acide 2,3-dihydroxyphtalique, l'acide 2,4-dihydroxy-phtalique, l'acide 3,4-dihydroxyphtalique, l'acide 3-fluorophtalique, l'acide 5-fluoroisophtalique, l'acide 2-fluorotéréphtalique, l'acide tétrafluorophtalique, l'acide tétrafluoroisophtalique, l'acide tétrafluoro-téréphtalique, l'acide 1,4-naphtalènedicarboxylique, l'acide 1,5-naphtalènedicarboxylique, l'acide 2,6-naphtalènedicarboxylique, l'acide 2,7-naphtalènedicarboxylique, l'acide diphénique, l'acide 1,8-dihydroxynaphtalène-3,6-dicarboxylique, l'acide diphényléther-4,4'-dicarboxylique, l'acide benzophénone-4,4'-dicarboxylique, l'acide diphénylsulfone-4,4'-dicarboxylique, l'acide biphényle-4,4'-dicarboxylique, l'acide 4-trifluorométhylphtalique, le 2,2-bis(4-carboxyphényl)hexafluoropropane, l'acide 4,4'-stilbènedicarboxylique, l'acide 4-carboxycinnamique ou leurs esters d'alkyle en C₁ à C₂₀, leurs esters d'aryle en C₅ à C₁₂, leurs anhydrides d'acide ou leurs chlorures d'acide.

4. Membrane selon une ou plusieurs revendications précédentes, **caractérisée en ce que** l'on utilise comme acide carboxylique aromatique des acides tricarboxyliques, leurs esters d'alkyle en C₁ à C₂₀, leurs esters d'aryle en C₅ à C₁₂, leurs anhydrides d'acide ou leurs chlorures d'acide, ou des acides tétracarboxyliques, leurs esters d'alkyle en C₁ à C₂₀, leurs esters d'aryle en C₅ à C₁₂, leurs anhydrides d'acide ou leurs chlorures d'acide.

5. Membrane selon la revendication 4, **caractérisée en ce que** l'on utilise comme acide carboxylique aromatique l'acide 1,3,5-benzènetricarboxylique (acide trimésique); l'acide 2,4,5-benzènetricarboxylique (acide trimellitique); l'acide (2-carboxyphényl)iminodiacétique, l'acide 3,5,3'-biphényltricarboxylique ; l'acide 3,5,4'-biphényltricarboxylique, l'acide 2,4,6-pyridinetricarboxylique, les acides benzène-1,2,4,5-tétracarboxyliques; les acides naphtalène-1,4,5,8-tétracarboxyliques, les acides 3,5,3',5-biphényltétracarboxyliques, l'acide benzophénonetétracarboxylique, l'acide 3,3',4,4'-biphényltétracarboxylique, l'acide 2,2',3,3'-biphényltétracarboxylique, l'acide 1,2,5,6-naphtalènetétracarboxylique et/ou l'acide 1,4,5,8-naphtalènetétracarboxylique.

6. Membrane selon la revendication 4, **caractérisée en ce que** la teneur en acide tricarboxylique et/ou en acides tétracarboxyliques se situe entre 0 et 30% en mole, de préférence entre 0,1 et 20% en mole, en particulier entre 0,5 et 10% en mole par rapport à l'acide dicarboxylique utilisé.

7. Membrane selon la revendication 1., **caractérisée en ce que** l'on utilise comme acides carboxyliques hétéroaromatiques, des acides dicarboxyliques hétéroaromatiques, des acides tricarboxyliques hétéroaromatiques et/ou des acides tétracarboxyliques hétéroatomiques, qui contiennent au moins un atome d'azote, d'oxygène, de soufre ou de phosphore dans les aromatiques.

8. Membrane selon la revendication 7, **caractérisée en ce que** l'on utilise de l'acide pyridine-2,5-dicarboxylique, de l'acide pyridine-3,5-dicarboxylique, de l'acide pyridine-2,6-dicarboxylique, de l'acide pyridine-2,4-dicarboxylique, de l'acide 4-phényl-2,5-pyridinedicarboxylique, de l'acide 3,5-pyrazoledicarboxylique, de l'acide 2,6-pyrimidinedicarboxylique, de l'acide 2,5-pyrazinedicarboxylique, de l'acide 2,4,6-pyridinetricarboxylique, de l'acide benzimidazol-5,6-dicarboxylique ainsi que leurs esters d'alkyle en C₁ à C₂₀ ou leurs esters d'aryle- en C₅ à C₁₂ ou leurs anhydrides d'acide ou leurs chlorures d'acide.

9. Membrane selon la revendication 1, **caractérisée en ce que** l'on utilise comme acide diaminocarboxylique aromatique l'acide diaminobenzoique et/ou ses dérivés de mono- et de dichlorhydrate.

10. Membrane selon la revendication 1, **caractérisée en ce que** le mélange préparé à l'étape A) et/ou à l'étape B) contient des composés de formule : 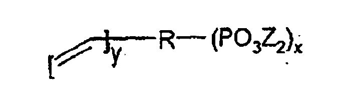
dans laquelle :
R représente une liaison, un groupement alkyle en C₁ à C₁₅, un groupement alcoxy en C₁ à C₁₅, un groupement-éthylènoxy ou aryle en C₅ à C₂₀ ou un groupement hétéroaryle, dans lequel les radicaux précédents peuvent être, pour leur part, substitués par un halogène, -OH, COOZ, -CN, NZ₂,
les groupements Z représentent, indépendamment les uns des autres, de l'hydrogène, un groupement alkyle en C₁ à C₁₅, un groupement alcoxy en C₁ à C₁₅, un groupement éthylèneoxy ou aryle en C₅ à C₂₀ ou un groupement hétéroaryle, dans lequel les radicaux précédents peuvent être, pour leur part, substitués par un halogène, -OH, -CN, et
x représente un nombre entier valant 1, 2, 3, 4, 5, 6, 7, 8, 9 ou 10,
y représente un nombre entier valant 1, 2, 3, 4, 5, 6, 7, 8, 9 ou 10,
et/ou de formule : 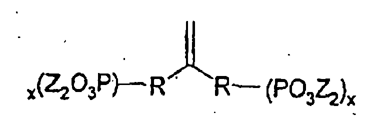
dans laquelle :
R représente une liaison, un groupement alkyle en C₁ à C_{15,} un groupement alcoxy en C₁ à C₁₅, un groupement éthylèneoxy ou un groupement aryle ou hétéroaryle en C₅ à C₂₀, dans lequel les radicaux précédents peuvent être, pour leur part, substitués par un halogène, -OH, COOZ, -CN, NZ₂,
les groupements Z représentent, indépendamment les uns des autres, de l'hydrogène, un groupement alkyle en C₁ à C₁₅, un groupement alcoxy en C₁ à C₁₅, un groupement éthylèneoxy ou aryle ou hétéroaryle en C₅ à C₂₀, dans lequel les radicaux précédents peuvent être, pour leur part, substitués par un halogène, -OH, -CN, et
x représente un nombre entier valant 1, 2, 3, 4, 5, 6, 7, 8, 9 ou 10,
et/ou de formule : 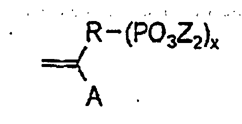
dans laquelle :
A représente un groupement de formules COOR², CN, CONR²₂, OR² et/ou R², où R représente de l'hydrogène, un groupement alkyle en C₁ à C₁₅, un groupement alcoxy en C₁ à C₁₅, un groupement éthylèneoxy ou un groupement aryle ou hétéroaryle en C₅ à C₂₀, dans lequel les radicaux précédents peuvent être, pour leur part, substitués par un halogène, -OH, COOZ, -CN, NZ₂,
R représente une liaison, un groupement alkylène en C₁ à C₁₅ à double liaison, un groupement alkylèneoxy en C₁ à C₁₅ à double liaison, par exemple un groupement éthylèneoxy ou un groupement aryle ou hétéroaryle en C₅ à C₂₀ à double liaison, dans lequel les radicaux précédents peuvent, pour leur part, être substitués par un halogène, -OH, COOZ, -CN, NZ₂,
les groupements Z représentent, indépendamment les uns des autres, de l'hydrogène, un groupement alkyle en C₁ à C₁₅, un groupement alcoxy en C₁ à C₁₅, un groupement éthylèneoxy ou un groupement aryle ou hétéroaryle en C₅ à C₂₀, dans lequel les radicaux précédents peuvent être, pour leur part, substitués par un halogène, -OH, -CN, et
x représente un nombre entier valant 1, 2, 3, 4, 5, 6, 7, 8, 9 ou 10.

11. Membrane selon la revendication 1, **caractérisée en ce que** l'on effectue, à l'étape D), la polymérisation de monomères réticulables, qui présentent au moins deux doubles liaisons carbone-carbone.

12. Membrane selon la revendication 1, **caractérisée en ce que** la polymérisation de l'étape D) est provoquée par une substance capable de former des radicaux.

13. Membrane selon la revendication 1, **caractérisée en ce que** la polymérisation de l'étape D) est effectuée par exposition à de la lumière IR ou NIR, de la lumière UV, des rayons β, γ et/ou des faisceaux électroniques.

14. Membrane selon la revendication 1, **caractérisée en ce que** le mélange produit à l'étape A) et/ou à l'étape B) contient un polymère dissous, dispersé et/ou en suspension.

15. Membrane selon la revendication 1, **caractérisée en ce que** l'on produit, à l'étape C), une couche d'une épaisseur comprise entre 20 et 4000 µm, de préférence entre 30 et 3500 µm, en particulier entre 50 et 3000 µm.

16. Membrane selon la revendication 1, **caractérisée en ce que** la membrane formée après l'étape D) a une épaisseur comprise entre 15 et 3000 µm, de préférence entre 20 et 2000 µm, en particulier entre 20 et 1500 µm.

17. Electrode avec un revêtement polymère conducteur de protons à base de polyazoles, que l'on peut obtenir par un procédé comprenant les étapes suivantes :
A) le mélange d'un ou plusieurs composés tétraaminés aromatiques avec un ou plusieurs acides carboxyliques aromatiques, leurs esters, leurs halogénures d'acide ou leurs anhydrides d'acide, qui contiennent au moins deux groupes acide par monomère d'acide carboxylique, ou le mélange d'un ou plusieurs acides diaminocarboxyliques aromatiques et/ou hétéroaromatiques, leurs esters, leurs halogénures d'acide ou leurs anhydrides d'acide, avec de l'acide vinylphosphonique,
B) le chauffage du mélange que l'on peut obtenir à l'étape A) sous gaz inerte et à des températures jusqu'à 350°C en formant des polymères de polyazoles,
C) l'application d'une couche en utilisant le mélange de l'étape A) et/ou de l'étape B) sur une électrode, et
D) la polymérisation de l'acide vinyl-phosphonique.

18. Electrode selon la revendication 17, dans laquelle le revêtement a une épaisseur comprise entre 2 et 3000 µm, de préférence entre 3 et 2000 m, en particulier entre 5 et 1500 µm.

19. Unité de membrane(s)-électrode(s) contenant au moins une électrode et au moins une membrane selon une ou plusieurs des revendications 1 à 16.

20. Unité de membrane (s) -électrode (s) contenant au moins une électrode selon la revendication 17 ou 18, et au moins une membrane selon une ou plusieurs des revendications 1 à 16.

21. Pile à combustible contenant une ou plusieurs unités de membrane(s)-électrode(s) selon la revendication 19 ou 20.

22. Procédé de fabrication de membranes polymères conductrices de protons, comprenant des polymères contenant des groupements acide phosphonique, qui comprend les étapes suivantes :
A) le mélange d'un ou plusieurs composés tétraaminés aromatiques avec un ou plusieurs acides carboxyliques aromatiques, leurs esters, leurs halogénures d'acide ou leurs anhydrides d'acide, qui contiennent au moins deux groupements acide par monomère d'acide carboxylique, ou le mélange d'un ou plusieurs acides diaminocarboxyliques aromatiques et/ou hétéroaromatiques, leurs esters, leurs halogénures d'acide ou leurs anhydrides d'acide, avec de l'acide vinylphosphonique,
B) le chauffage du mélange que l'on peut obtenir à l'étape A) sous gaz inerte et à des températures jusqu'à 350°C en formant des polymères de polyazoles,
C) l'application d'une couche en utilisant le mélange de l'étape A et/ou de l'étape B) sur un support, et
D) la polymérisation de l'acide vinyl-phosphonique.
